# FASCICULE DE BREVET EUROPEEN

(11) **EP 0 458 000 B1**
(45) Date de publication et mention de la délivrance du brevet: **06.10.1993**
(21) Numéro de dépôt: 90830229.2
(22) Date de dépôt: 22.05.1990
(51) Int. Cl.: B60N 2/44, A47C 7/46

(54) **Siège de véhicule automobile**
Kraftfahrzeugsitz
Vehicle seat

(43) Date de publication de la demande: 27.11.1991
(73) Titulaire: SEPI S.p.A., I-10154 TORINO (IT)
(72) Inventeur: Le Joncour, Daniel, F-91940 Les Ulis (FR)
(74) Mandataire: Saconney, Piero

(56) Documents cités:
- EP-A- 0 353 210
- DE-A- 2 822 766
- DE-A- 3 817 086
- IT-A- 6 721 588
- US-A- 2 139 028

## Description

La présente invention se rapporte aux sièges de véhicules automobiles, du type qui comprend un dossier comprenant lui-même un châssis de dossier et un dispositif d'appui lombaire associé au châssis de dossier, dans lequel ledit dispositif d'appui lombaire comprend un panneau élastiquement déformable sensiblement parallèle au plan général du dossier et susceptible de prendre une configuration cambrée vers l'avant, ledit dispositif d'appui lombaire comprenant en outre des moyens pour régler le degré de cambrure du panneau sans modifier sensiblement la position de la zone de cambrure maximum du panneau par rapport au châssis du dossier, lesdits moyens de réglage comprenant un élément de support auxiliaire auquel est fixée à la partie inférieure du panneau, ledit élément de support auxiliaire étant articulé au châssis du dossier autour d'un axe transversal disposé sensiblement à la hauteur de ladite zone de cambrure maximum du panneau, a l'aide d'un mécanisme de réglage qui permet de régler la position angulaire de l'élément de support auxiliaire autour dudit axe transversal par rapport au châssis du dossier, ledit élément de support auxiliaire s'étendant sensiblement au-dessous dudit axe transversal.

Un siège du type spécifié ci-dessus est décrit et illustré dans le brevet italien IT-A-1 219 107 (demande n° 67215-A/88 déposée le 14 Mars 1988 et mise à la disposition du public en date du 14 Septembre 1989).

Le but de la présente invention est de prefectionner le siège connu indiqué ci-dessus en améliorant en particulier la fiabilité et en lui donnant une construction plus résistante, plus économique et dépourvue de jeux.

Pour atteindre ce but, la présente invention a pour objet un siège du type indiqué plus haut, caractérisé en ce que lesdits moyens de réglage du dispositif d'appui lombaire comprennent un deuxième élément de support auxiliaire qui s'étend sensiblement au-dessus dudit axe transversal auquel est relié le panneau élastique, ledit deuxième élément de support auxiliaire étant lui aussi articulé au châssis du dossier autour dudit axe transversal, ledit mécanisme de réglage étant apte à provoquer une rotation simultanée du premier et du deuxième éléments de support auxiliaires l'un en sens inverse de l'autre pour obtenir un réglage du degré de cambrure du panneau sans modifier en même temps la position de la zone de cambrure maximum du panneau par rapport au châssis du dossier.

La technique classique des dispositifs d'appui lombaire comprend plusieurs solutions possibles. L'une de ces solutions prévoit l'utilisation d'un panneau élastique pouvant être cambré vers l'avant. Selon la technique la plus traditionnelle, on fait varier la cambrure du panneau en agissant sur les bords supérieur et inférieur du panneau, par exemple en provoquant un rapprochement ou un éloignement mutuel de ces bords. A la suite de cette action, le degré de cambrure du panneau varie, en permettant à l'utilisateur d'obtenir le degré d'appui lombaire le mieux adapté à la configuration de son dos. L'inconvénient principal de cette solution classique consiste dans le fait qu'en modifiant le cambrure du panneau, on provoque une variation dans la direction longitudinale du véhicule automobile (dans l'état monté du siège) de la zone de cambrure maximum du panneau. Ceci contraint la personne qui occupe le siège à changer de position par rapport à l'assise du siège dans la direction longitudinale, ce qui est désavantageux pour l'obtention du confort optimal et pour l'obtention d'un bon soutien des cuisses.

Pour obvier à cet inconvénient, le brevet italien IT-A-1 219 107 précité a proposé un siège de véhicule automobile dans lequel on fait varier la cambrure du panneau élastique en modifiant la position du bord supérieur et du bord inférieur du panneau élastique sans modifier en même temps la position de la zone de cambrure maximum du panneau dans la direction longitudinale du véhicule. Dans cette demande de brevet italien, ce résultat est obtenu grâce au fait que le bord inférieur du panneau est relié audit premier élément de support auxiliaire qui est articulé au châssis du dossier autour d'un axe transversal. Le bord supérieur du panneau élastique est au contraire relié à la partie supérieure du châssis du dossier, laquelle constitue toutefois une partie séparée de la partie inférieure du châssis du dossier et est articulée à ce châssis autour dudit axe transversal. Le mécanisme de réglage prévu au niveau dudit axe transversal est apte à commander une rotation de l'élément de support auxiliaire et de la partie supérieure du châssis du dossier l'un en sens inverse de l'autre par rapport à la partie inférieure du châssis du dossier.

La principale différence qui distingue la présente invention de la solution connue précitée consiste dans le fait que, dans le cas de l'invention, le châssis du dossier présente une structure rigide, non articulée, tandis qu'il est prévu un deuxième élément de support auxiliaire, qui est commandé en synchronisme avec le premier élément de support auxiliaire par le mécanisme de réglage. Les deux éléments de support auxiliaires sont articulés au châssis rigide du dossier autour dudit axe transversal et sont reliés respectivement au bord inférieur et au bord supérieur du panneau élastique. La zone centrale, de cambrure maximum, du panneau élastique, reste au contraire dans une position sensiblement fixe par rapport au châssis du dossier, quelle que soit la cambrure du panneau.

Le siège selon la présente invention présente, comparativement à la solution connue de la demande de brevet italien précitée, l'avantage d'être d'une construction plus simple, plus économique et plus fiable. La structure du châssis du dossier est en effet moins compliquée, ce châssis étant dépourvu de parties articulées, étant moins sujet à prendre du jeu et étant dons plus résistant.

D'autres caractéristiques et avantages de l'invention seront mieux compris à la lecture de la description qui va suivre d'un exemple de réalisation et en se référant aux dessins annexés sur lesquels:
la figure 1 est une vue en perspective de l'armature d'un siège selon la technique connue ;
la figure 2 est une vue en perspective d'un siège selon l'invention ;
la figure 3 est une vue en perspective de l'armature du dossier du siège selon l'invention ;
la figure 4 est une vue en perspective éclatée des parties représentées sur la figure 3 ;
la figure 5 est une vue en perspective éclatée d'un détail de la figure 4 ;
la figure 6 est une vue de côté schématique de la figure 2 ;
les figures 7, 8 représentent un détail de la figure 6 dans deux conditions de fonctionnement différentes.

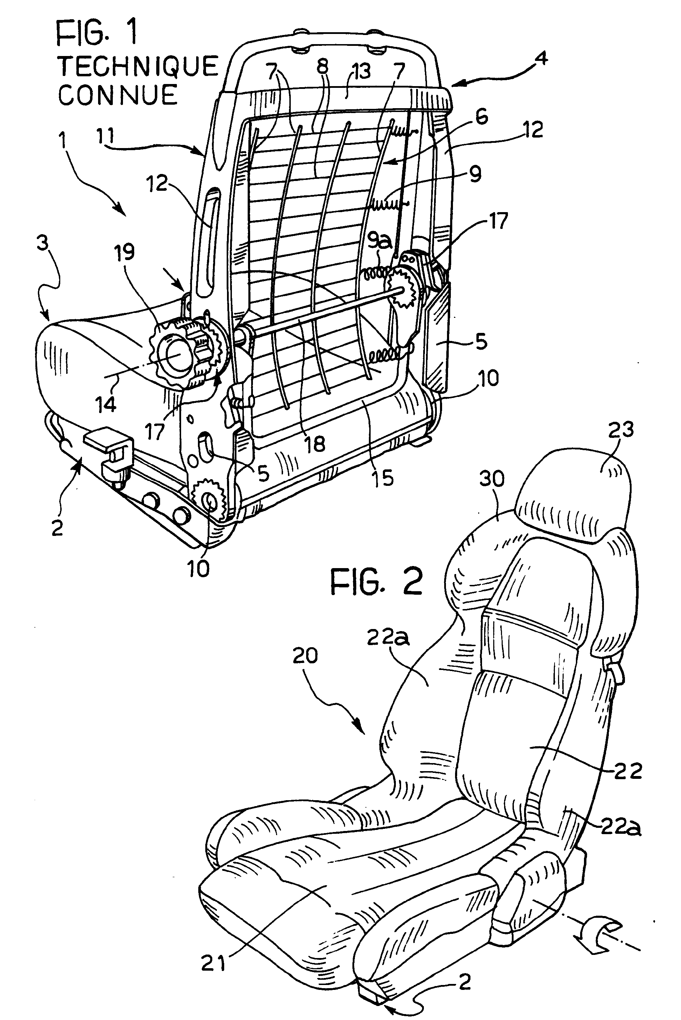

La figure 1 représente un siège 1 qui correspond à la solution proposée dans le brevet italien IT-A-1 219 107. Le siège 1 comprend un châssis en tôle métallique 2 destiné à être fixé au plancher d'un véhicule automobile avec interposition de glissières d'un type connu quelconque pour le réglage de la position du siège 1 par rapport au plancher, selon la direction longitudinale du véhicule. Le châssis 2 porte une assise 3 et un dossier 4 dont le rembourrage n'a pas été représenté sur la figure 1, pour la clarté du dessin. Le dossier 4 comprend un châssis en tôle métallique comprenant deux montants latéraux inférieurs 5 qui sont reliés au châssis de base 2 par une paire d'articulations 10 qui sont munies, selon la technique classique, d'un dispositif de réglage du dossier. La partie supérieure du châssis du dossier, indiquée par le numéro de référence 11, comprend deux montants latéraux supérieurs 12 réunis en haut par une traverse 13. Le châssis 11 est articulé à la partie inférieure du châssis du dossier, constituée par des montants 5, autour d'un axe transversal 14. Autour du même axe 14, est encore articulé un élément de support auxiliaire 15 possédant la forme générale d'un U, qui s'étend au-dessous de l'axe 14. Chacun des deux montants latéraux inférieurs 5 porte à l'extrémité supérieure un dispositif de réglage qui permet de régler la position relative entre le montant latéral supérieur 12 et le montant latéral inférieur 5. Les deux dispositifs de réglage, désignés dans leur ensemble par 17, sont commandés par un même arbre transversal 18 par l'intermédiaire d'une manette 19. Les dispositifs de réglage 17 peuvent être du type connu qui est communément utilisé au niveau des articulations 10 du siège pour régler la position d'inclinaison du dossier. Ainsi qu'il est bien connu, ces dispositifs comprennent des couronnes dentées engrènant entre elles, placées de telle manière qu'une rotation de la manette 19 provoque une rotation relative des parties reliées par cette manette. En pratique, dans le cas de la solution représentée sur la figure 1, chacun desdits dispositifs règle la position angulaire relative de deux plaques de tôle qui sont fixées respectivement au montant latéral supérieur 12 correspondant et à l'extrémité correspondante de l'élément de support auxiliaire 15. De cette façon, lorsqu'on agit sur la manette 19, on provoque une rotation simultanée, l'un en sens inverse de l'autre, de la partie supérieure du châssis du dossier (constituée par les deux montants 12 et par la traverse 13) et de l'élément de support auxiliaire 15.

Le numéro de référence 6 désigne dans son ensemble un panneau élastique qui, dans l'exemple représenté, est d'un type connu dans le commerce sous la marque "Pullmaflex", qui comprend une pluralité de cordes parallèles 7 qui se croisent avec une série de câbles métalliques horizontaux 8. Le panneau 6 est relié au châssis du dossier par deux séries latérales de ressorts hélicoïdaux 9. Plus précisément, la partie supérieure du panneau est reliée à la partie supérieure 11 du châssis du dossier, tandis que la partie inférieure du panneau est reliée à l'élément de support auxiliaire 15. Finalement, la partie centrale, de cambrure maximum, du panneau, est reliée par deux ressorts 9a (un seul de ces ressorts est visible sur la figure 1) aux deux montants latéraux inférieurs 5 du dossier.

Grâce à la disposition décrite plus haut, le degré de cambrure du panneau peut être modifié en agissant sur la manette 19, de manière à provoquer un déplacement de la position des bords supérieur et inférieur du panneau, sans modifier par cela la position de la zone de cambrure maximum du panneau par rapport à la partie fixe du châssis du dossier, constituée par les deux montants latéraux inférieurs 5. Par conséquent, lorsqu'on modifie la cambrure du panneau, la personne qui occupe le siège n'a pas à modifier sa position sur l'assise selon la direction longitudinale, puisque la position de la partie centrale la plus proéminente du panneau reste inchangée.

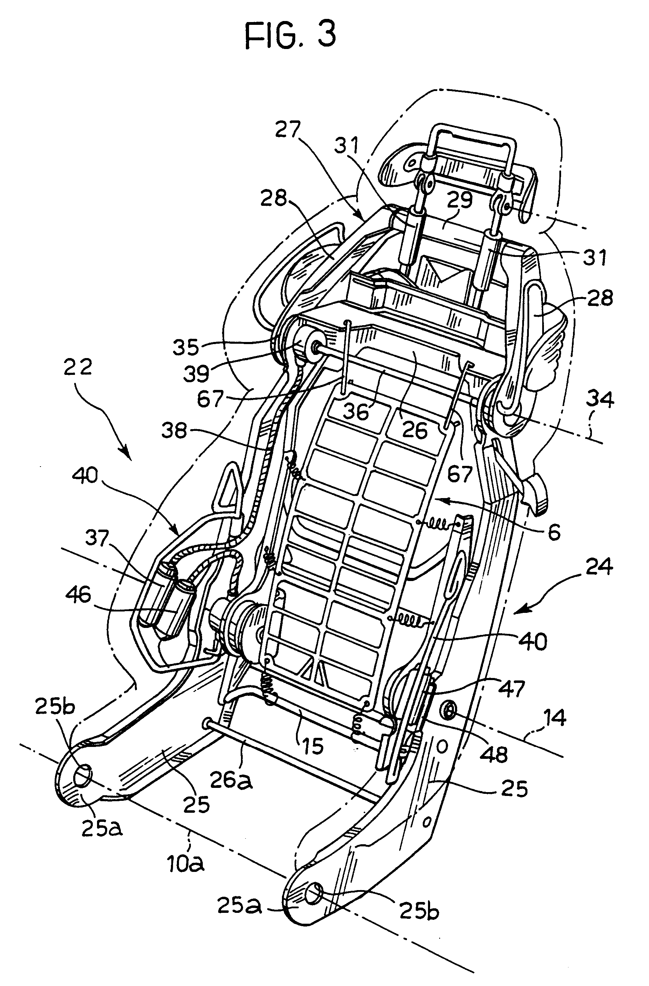

La figure 2 montre une vue en perspective d'un siège 20 selon la présente invention, qui comprend une assise 21 et un dossier 22 muni d'un appuie-tête 23. La structure du dossier 22 est décrite en détail dans la suite en regard des figures 3 à 8.

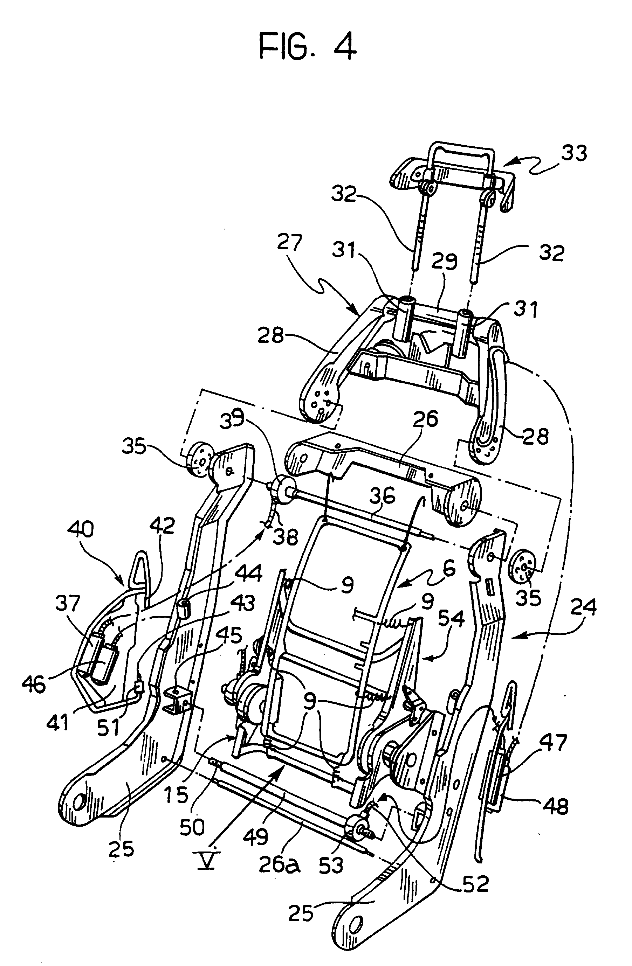

Comme on le voit en se reportant en particulier aux figures 3, 4, le dossier 22 du siège selon l'invention comprend un châssis rigide 24 en tôle métallique qui comprend deux montants latéraux 25 dont les extrémités supérieures sont réunies entre elles par une traverse 26, elle aussi en tôle métallique, tandis que les extrémités inférieures sont réunies par une tige 26a.

De même que ceci est prévu dans la solution connue et représentée sur la figure 1, un élément de support auxiliaire 15 est articulé au châssis 24 du dossier autour d'un axe transversal 14 disposé à une hauteur qui correspond à la zone lombaire du dos de la personne assise. Toutefois, contrairement à ce qui est prévu dans la solution connue représentée sur la figure 1, le châssis 24 n'est pas articulé au niveau de l'axe 14, c'est-à-dire qu'il ne comprend pas deux parties articulées au niveau de l'axe 14. Au contraire, l'armature du dossier comprend un châssis auxiliaire supérieur 27, lui aussi composé de tôle métallique, qui comprend deux montants latéraux réunis en haut par une traverse 29. Le châssis 27 est destiné à se trouver sensiblement au niveau de la partie supérieure du dos de la personne assise, immédiatement au-dessous du cou, et on peut le faire tourner vers l'avant pour donner un bon appui à cette partie.

Sur la figure 2, le numéro de référence 30 désigne la partie du rembourrage du dossier qui est associée au châssis auxiliaire supérieur 27.

La traverse 29 du châssis 27 comprend, d'une façon connue en soi, une paire de douilles métalliques 31 soudées à cette traverses, dans lesquelles se logent les queues terminales 32 du châssis 33 de l'appuie-tête 23.

Les extrémités inférieures des montants 28 sont articulées aux extrémités supérieures des montants 25 autour d'un axe transversal 34, à l'aide d'une paire de mécanismes de réglage 35 d'un type connu en soi normalement utilisés pour le réglage de l'inclinaison du dossier des sièges de véhicules automobiles. Les deux dispositifs de réglage 35 (figure 4) sont commandés par un arbre transversal commun 36 qui, dans l'exemple de réalisation représenté, est commandé par un moteur électrique 37 porté par le dossier, comme on le verra plus en détail dans la suite. Le moteur 37 commande l'arbre 36 par l'intermédiaire d'un arbre flexible 38 et d'un groupe réducteur 39, lui aussi de type connu. Naturellement, il est possible de prévoir une commande manuelle de l'arbre 36. Dans ce cas, l'arbre 36 présente une extrémité qui émerge à l'extérieur du dossier, sur un côté de celui-ci, et qui porte une manette de commande.

Les deux montants latéraux 25 qui constituent le châssis rigide 24 du dossier présentent des extrémités inférieures 25a qui font saillie vers l'avant et sont destinées à être articulées au châssis de base du siège 2 (figure 2) par l'intermédiaire d'un dispositif de réglage de l'inclinaison du dossier, d'un type connu quelconque, non représenté. L'axe d'articulation inférieur du dossier 10a (figure 3) est défini par deux trous coaxiaux 25b, ménagés dans les montants 25 au niveau des extrémités 25a et destinés à recevoir le mécanisme de réglage. Ainsi qu'on l'a représenté sur la figure 3, l'axe d'articulation du dossier 10a est donc sensiblement avancé relativement au plan général du dossier, comme cela a déjà été proposé dans la demande de brevet européen EP-A-0 353 210 publiée en date du 31.1.1990. Par suite de cette position avancée, l'axe 10a se trouve sensiblement sur le même plan vertical que l'articulation entre le buste et les jambes de la personne assise, ce qui permet d'obtenir l'avantage consistant en ce que la position dans la direction verticale du dos de la personne assise par rapport au dossier ne change pas sensiblement par suite d'une variation de l'inclinaison du dossier.

Comme on le voit en se reportant à la figure 2, le dossier 22 présente deux ailes 22a à position réglable, dont chacune présente un châssis 40 (figures 3, 4) constitué par un élément métallique allongé, de section circulaire, replié selon la configuration générale d'un C, et auquel est également soudée une paroi en tôle 41. Les extrémités de l'élément allongé constituant le châssis 40 sont alignées le long du même axe et dirigées l'une vers l'autre, comme indiqué en 42, 43 sur la figure 4. Ces extrémités sont engagées dans des logements correspondants 44, 45 ménagés dans le montant latéral respectif 25 du châssis 24 du dossier.

Comme on le voit en se reportant aux figures 3, 4, le moteur électrique 37 qui commande le réglage de la partie auxiliaire supérieure 30 du dossier est porté par le châssis 40 prévu sur le côté droit du siège. Ce châssis porte aussi un moteur électrique 46 dont la fonction sera décrite clairement dans la suite. Le châssis 40 prévu sur l'autre côté du siège porte un moteur électrique 47 pour la commande du réglage de la position des deux châssis 40 et un moteur électrique 48 dont la fonction sera expliquée dans la suite.

La position des deux châssis 40 est commandée par un arbre transversal 49 monté rotatif à ses deux extrémités sur deux montants 25 et ayant une extrémité 50 en forme de vis hélicoïdale qui engrène avec un pignon 51 prévu sur l'extrémité 43 de l'élément constituant le châssis 40. La rotation de l'arbre 49 est commandée par le moteur électrique 47 par l'intermédiaire d'une transmission flexible 52 et d'un réducteur 53.

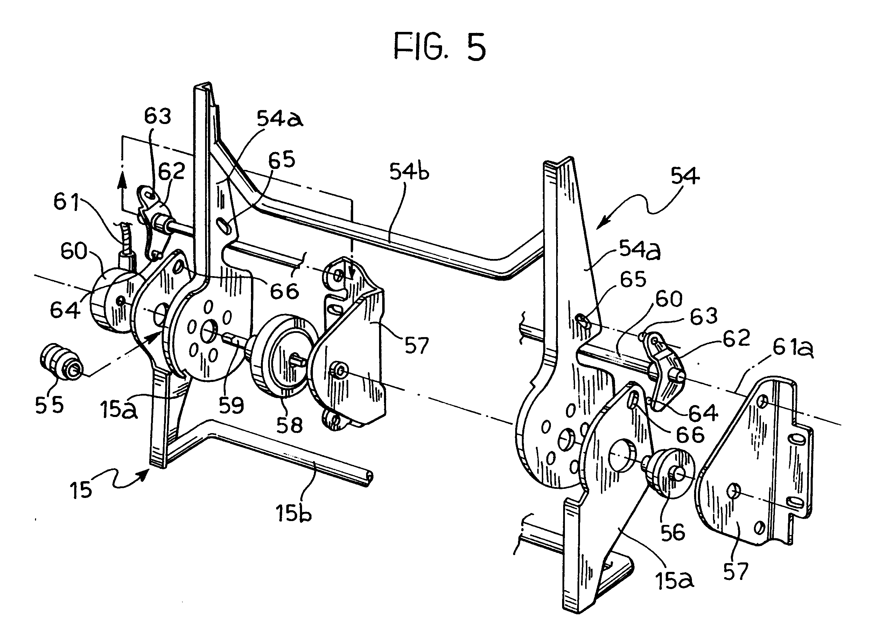

Comme on peut le voir en se reportant également aux figures 4 à 8, le dossier selon l'invention est muni d'un dispositif d'appui lombaire comprenant un panneau élastiquement déformable 6 contenu sensiblement dans le plan général du dossier et cambré vers l'avant, la zone de cambrure maximum du panneau étant sensiblement à la hauteur de l'axe transversal 14. Le panneau élastique 6 qui est constitué dans l'exemple représenté par un unique élément de matière plastique, est relié en bas, à l'aide de ressorts 9, à l'élément de support auxiliaire 15 et il est en outre relié par d'autres ressorts 9 à un deuxième élément de support auxiliaire indiqué en 54. Les deux éléments de support auxiliaires 15, 54 sont articulés au châssis 24 du dossier autour de l'axe transversal 14 et s'étendent respectivement au-dessus et au-dessous de cet axe. Plus précisément (figure 5), l'élément de support auxiliaire 15 présente deux plaques latérales 15a réunies à leur extrémité inférieure par une traverse tubulaire (15b). L'élément de support auxiliaire 54 comprend des plaques latérales en tôle 54a réunies à leurs extrémités supérieures par une traverse tubulaire 54b. Les plaques 15a, 54a présentent des trous coaxiaux pour s'articuler, à l'aide de tourillons 55, 56, à deux étriers de tôle 57 qui sont fixés aux montants latéraux 25 du châssis du dossier. Sur le côté droit des éléments de support auxiliaires 15 , 54, est prévu en outre une articulation 58, du type connu qui a déjà été mentionné plus haut à propos des mécanismes 35. Le dispositif d'articulation 58 présente un arbre de commande 59. Dans l'exemple représenté, l'arbre 59 est commandé par l'intermédiaire d'un dispositif réducteur 60 et d'une transmission flexible 61, par le moteur électrique 46 prévu sur l'armature 40 de l'élément latéral droit 22a du dossier. Toutefois, la commande du mécanisme de réglage peut être elle aussi de type manuel. Egalement dans ce cas, il est prévu une manette de commande sur l'extrémité de l'arbre 59 qui émerge à l'extérieur du dossier. Le mécanisme de réglage est interposé entre l'étrier respectif 57 et la plaque 54a de l'élément auxiliaire 54. Lorsque ce mécanisme est commandé, il provoque une rotation de la plaque 54a de droite appartenant à l'élément 54 par rapport à l'étrier 57 respectif. On détermine de cette façon une rotation de l'ensemble de l'élément support auxiliaire 54. Cette rotation détermine aussi une rotation simultanée, en sens inverse, de l'élément de support auxiliaire 15, par l'intermédiaire d'une transmission mécanique constituée par un arbre transversal 60 qui est monté rotatif autour d'un axe 61 a sur les deux étriers 57, et par deux leviers culbuteurs 62 qui sont fixés aux extrémités de l'arbre 60 et qui portent à leurs extrémités des tourillons 63, 64 qui sont engagées dans des fentes respectives 65, 66 ménagées dans les plaques 54a, 15a.

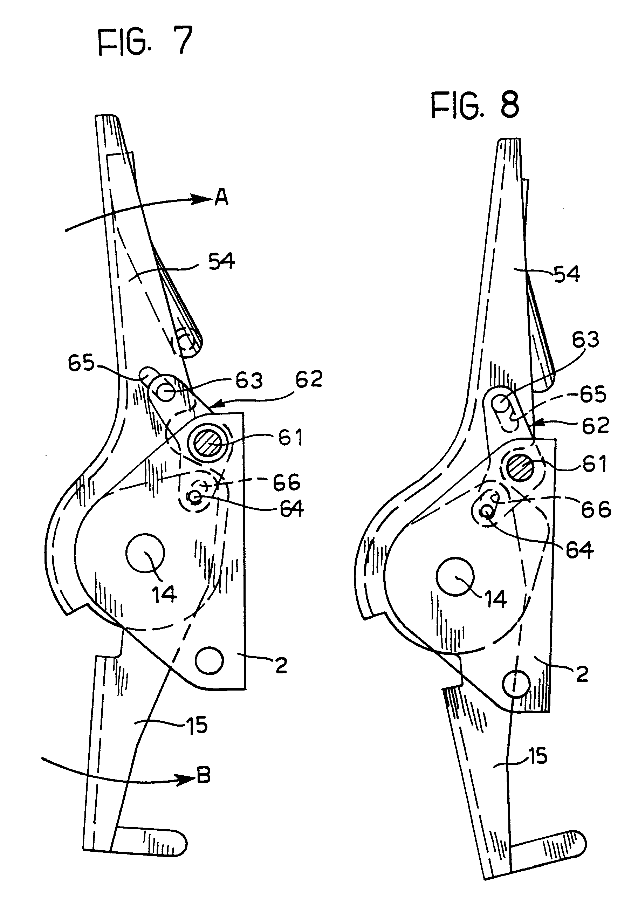

Le fonctionnement du dispositif décrit ci-dessus ressort de façon particulièrement évidente d'un examen des figures 7, 8 qui illustrent, en vue de côté, deux différentes positions relatives possibles des éléments de support auxiliaires 15, 54.

La figure 7 représente les deux châssis 15, 54 dans la position qui correspond à la cambrure minimum du panneau élastique 6 . En intervenant sur le mécanisme de réglage (par activation du moteur électrique 46), il est possible de provoquer une rotation dans le sens des aiguilles d'une montre (relativement à la figure 7) de l'élément 54 autour de l'axe 14. Cette rotation provoque par conséquent une rotation des leviers culbuteurs 62 autour de l'axe 61, dans le sens des aiguilles d'une montre, par suite de l'engagement des tourillons 63 dans les fentes 65. La rotation des leviers 62 dans le sens des aiguilles d'une montre provoque donc une rotation de l'élément auxiliaire 15 dans le sens inverse de celui des aiguilles d'une montre, par suite de l'engagement des tourillons 64 dans les fentes 66. Synthétiquement, l'intervention sur ledit mécanisme de réglage provoque une rotation simultanée des éléments de support 15, 54 autour de l'axe 14, en sens inverse l'un de l'autre, comme ceci est indiqué par les flèches A, B sur la figure 7. Naturellement, si l'on inverse le sens de rotation de l'arbre de commande 59 de l'articulation 58, on obtient une rotation inverse des éléments 54, 15. En revenant à l'exemple ci-dessus, lorsque le mécanisme de réglage est commandé pour faire passer les éléments 15, 54 de la position représentée sur la figure 7 à la position représentée sur la figure 8, on provoque une augmentatioçn de la cambrure du panneau élastique 6. Cette augmentation de cambrure est obtenue en modifiant la position de la partie inférieure et de la partie supérieure du panneau élastique sans modifier sensiblement la position de la zone du panneau qui se trouve à la hauteur de l'axe 14, c'est-à-dire de la zone de cambrure maximum. De cette façon, l'occupant du siège peut adapter la cambrure du panneau à la conformation spécifique de son dos sans être contraint de modifier sa position sur l'assise du siège dans la direction longitudinale.

Comme on peut le voir sur les figures 3, 4, le bord supérieur du panneau est lui aussi fixé à la traverse 26 à l'aide de deux câbles métalliques 67. Toutefois, ces câbles présentent une longueur suffisante pour permettre les variations de position du bord supérieur du panneau 6 qui dérive d'un changement de position des éléments de support 15, 54.

Ainsi que ceci ressort de la description qui précède, la principale différence par rapport à la solution connue: représentée sur la figure 1, réside dans le fait que le châssis 24 du dossier n'est pas articulé au niveau de l'axe 14 mais présente une structure rigide et qu'il est prévu un élément de support auxiliaire (l'élément 54) susceptible de se déplacer en synchronisme avec l'élément 15 pour faire varier le degré de cambrure du panneau élastique 6 d'appui lombaire.

La solution ci-dessus présente d'évidents avantages sur le plan de la simplicité de construction, de l'économie de fabrication, de la fiabilité du fonctionnement. Le mécanisme d'appui lombaire permet d'adapter la configuration du dossier de façon optimale à celle du dos de la personne assise au niveau de la zone lombaire, tandis que l'élément auxiliaire supérieur 27 du dossier permet un appui correct au niveau de la partie extrême supérieure du dos, immédiatement au-dessous du cou de la personne assise.

Il est prévu de préférence un système automatique de réglage de la hauteur de l'appuie-tête 33 (non représenté) qui est commandé par le moteur électrique 48 prévu sur le côté gauche du dossier.

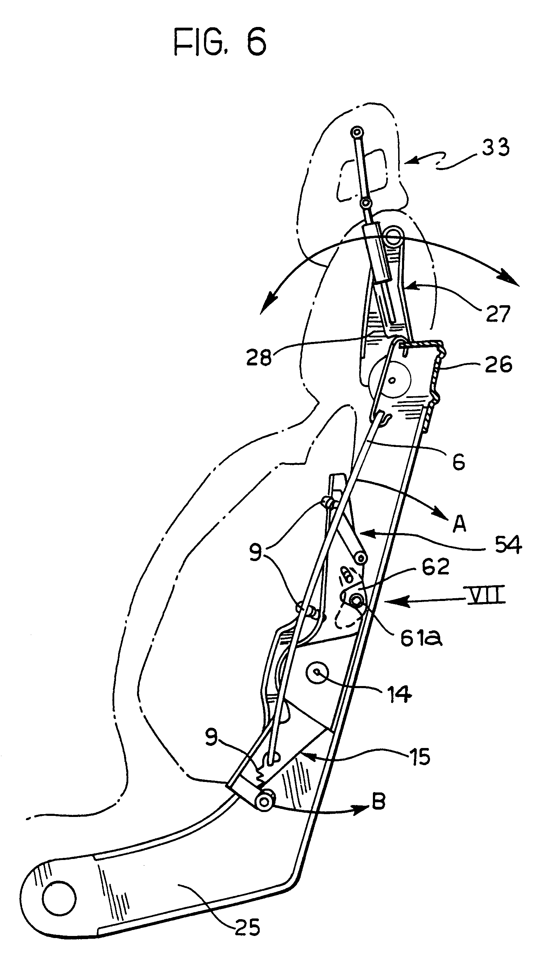

La figure 6 représente par une vue de côté schématique le dossier muni du système d'appui lombaire réglé dans la position qui correspond au minimum de cambrure du panneau élastique 6. A partir de cet état, les deux éléments 15, 54 peuvent être tournés dans le sens des flèches A, B pour augmenter la cambrure du panneau 6.

Bien entendu, diverses modifications pourront être apportées par l'homme de l'art au dispositif qui vient d'être décrit uniquement à titre d'exemple non limitatif sans sortir du cadre de l'invention tel que défini par les revendications suivantes.

## Revendications

1. Siège (20) de véhicule automobile, qui comprend un dossier (22)comprenant lui-même un châssis (24) de dossier et un dispositif d'appui lombaire (6, 15, 14, 54) associé au châssis de dossier (24), dans lequel ledit dispositif d'appui lombaire comprend un panneau élastiquement déformable (6) sensiblement parallèle au plan général du dossier (24) et susceptible de prendre une configuration cambrée vers l'avant, ledit dispositif d'appui lombaire comprenant en outre des moyens (15, 14, 54) pour régler le degré de cambrure du panneau (6) sans modifier sensiblement la position de la zone de cambrure maximum du panneau(6) par rapport au châssis (24) du dossier, lesdits moyens de réglage (15,14,54) comprenant un élément de support auxiliaire (15) auquel est fixée la partie inférieure du panneau elastique (6), ledit élément de support auxiliaire (15) étant articulé au châssis (24) du dossier autour d'un axe transversal (14) disposé sensiblement à la hauteur de ladite zone de cambrure maximum du panneau (6), à l'aide d'un mécanisme de réglage (58 à 66), qui permet de régler la position angulaire de l'élément de support auxiliaire (15) autour dudit axe transversal par rapport au châssis (24) du dossier, ledit élément de support auxiliaire s'étendant sensiblement au-dessous dudit axe transversal (14),
caractérisé en ce que ledit dispositif d'appui lombaire (6, 15, 14, 54) comprend un deuxième élément de support auxiliaire (54) qui s'étend sensiblement au-dessus dudit axe transversal (14) auquel est relié le panneau élastique (6), ledit deuxième élément de support auxiliaire (54) étant lui aussi articulé au châssis (24) du dossier autour dudit axe transversal (14), ledit mécanisme de réglage (58 à 66) étant apte à provoquer une rotation simultanée du premier et du deuxième éléments de support auxiliaires (15, 54), l'un en sens inverse de l'autre, pour obtenir un réglage du degré de cambrure du panneau sans modifier en même temps la position de la zone de cambrure maximum du panneau par rapport au châssis (24) du dossier.

2. Siège selon la revendication 1, caractérisé en ce que lesdits éléments de support auxiliaires (15, 54) comprennent chacun deux plaques latérales en tôle (15a ; 54a) articulées autour dudit axe transversal (14) et ayant leurs extrémités reliées par un élément de traverse (15b ; 54b), ledit mécanisme de réglage (58 à 66) étant apte à provoquer une rotation du deuxième élément de support auxiliaire (54) par rapport au châssis (24) du dossier, ledit dispositif de réglage lombaire comprenant en outre une transmission mécanique (60, 62) interposée entre les deux éléments de support auxiliaires (15, 54) pour provoquer une rotation du premier élément de support auxiliaire (15) en sens inverse de la rotation du deuxième élément auxiliaire (54) à la suite de la rotation de celui-ci.

3. Siège selon la revendication 1, caractérisé en ce que ladite transmission comprend un arbre (60) monté librement rotatif sur le châssis (24) du dossier autour d'un axe transversal (61a), une paire de leviers culbuteurs (62) montés aux extrémités dudit arbre et reliés chacun par ses extrémités aux plaques latérales respectives (15a, 54a) des deux éléments de support auxiliaires (15, 54) par des liaisons à tourillon et fente (63, 65 ; 64, 66).

4. Siège selon la revendication 1, caractérisé en ce que le dossier (22) comprend une partie supérieure (30) qui possède un châssis (27) articulé sur le châssis principal (24) du dossier autour d'un axe transversal (34), ladite partie auxiliaire supérieure (30) du dossier étant destinée à supporter la partie supérieure du dos de la personne assise, dans la zone qui se trouve directement au-dessous du cou, ledit châssis auxiliaire supérieur (27) étant articulé au châssis principal (24) à l'aide d'au moins un mécanisme de réglage (35) qui permet de faire varier la position angulaire du châssis auxiliaire supérieur (27) autour dudit axe transversal supérieur (34).

5. Siège selon la revendication 3, caractérisé en ce que le châssis (24) du dossier comprend deux montants latéraux (25) dont les extrémités inférieures s'étendent en avant et sont articulées au châssis de base du siège autour d'un axe transversal qui est déporté sensiblement vers l'avant par rapport au plan général du dossier.

6. Siège selon la revendication 3, caractérisé en ce que le dossier comprend deux parties latérales orientables, qui comprennent des châssis respectifs (40).

7. Siège selon la revendication 6, caractérisé en ce que les châssis (40) desdites parties orientables du dossier supportent des moteurs électriques (37, 46, 47, 48) pour la commande des parties mobiles réglables du dossier.

8. Siège selon la revendication 7, caractérisé en ce qu'un desdits moteurs électriques est relié au mécanisme de réglage (58) des deux éléments de support auxiliaires (15, 54) au moyen d'une transmission flexible (61) et d'un dispositif réducteur (60).

## Patentansprüche

1. Kraftfahrzeugsitz (20) umfassend eine Rückenlehne (22), welche ihrerseits einen Rückenlehnenrahmen (24) und eine dem Rückenlehnenrahmen (24) zugeordnete Lendenstützeinrichtung (6,15,14,54) umfaßt, bei welchem die Lendenstützeinrichtung eine zur allgemeinen Ebene der Rückenlehne (24) im wesentlichen parallele und zum Einnehmen einer nach vorne gewölbten Konfiguration geeignete, elastisch deformierbare Tafel (6) umfaßt, wobei die Lendenstützeinrichtung darüber hinaus Mittel (15,14,54) zum Einstellen des Wölbungsgrads der Tafel (6) ohne wesentliche Änderung der Position des Bereichs maximaler Wölbung der Tafel (6) relativ zum Rückenlehnenrahmen (24) umfaßt, welche Einstellmittel (15,14,54) ein Hilfsstützelement (15) aufweisen, an welchem der untere Bereich der elastischen Tafel (6) befestigt ist, wobei das Hilfsstützelement (15) am Rückenlehnenrahmen (24) um eine im wesentlichen in der Höhe des Bereichs maximaler Wölbung der Tafel (6) angeordnete Querachse (14) mittels eines Einstellmechanismus (58-66) angelenkt ist, der das Einstellen der Winkelposition des Hilfsstützelements (15) um die Querachse relativ zum Rückenlehnenrahmen (24) ermöglicht, wobei sich das Hilfsstützelement im wesentlichen unterhalb der Querachse (14) erstreckt,
**dadurch gekennzeichnet,** daß
die Lendenstützeinrichtung (6,15,14,54) ein zweites Hilfsstützelement (54) umfaßt, welches sich im wesentlichen oberhalb der Querachse (14), an der die elastische Tafel (6) befestigt ist, erstreckt, wobei das zweite Hilfsstützelement (54) seinerseits auch am Rückenlehnenrahmen (24) um die Querachse (14) angelenkt ist, wobei ferner der Einstellmechanismus (58 bis 66) geeignet ist, eine gleichzeitige Drehung der ersten und zweiten Hilfsstützelemente (15,54) mit jeweils entgegengesetzten Drehrichtungen zu bewirken, um eine Einstellung des Wölbungsgrads der Tafel ohne gleichzeitige Veränderung der Position des Bereichs maximaler Wölbung der Tafel relativ zum Rückenlehnenrahmen (24) zu erhalten.

2. Sitz nach Anspruch 1, **dadurch gekennzeichnet,** daß jedes der Hilfsstützelemente (15,54) zwei um die Querachse (14) angelenkte Seitenplatten aus Blech (15a;54a) umfaßt, deren Enden durch ein Querelement (15b;54b) verbunden sind, wobei der Einstellmechanismus (58 bis 66) geeignet ist, eine Drehung des zweiten Hiifsstützelements (54) relativ zum Rückenlehnenrahmen (24) zu bewirken, wobei ferner die Lendeneinstelleinrichtung außerdem eine zwischen den zwei Hilfsstützelementen (15, 54)angeordnete mechanische Kraftübertragungseinrichtung (60,62) umfaßt, um eine Drehung des ersten Hilfsstützelements (15) in zur Drehrichtung des zweiten Hilfsstützelements (54) entgegengesetzter Drehrichtung infolge der Drehung desselben zu bewirken.

3. Sitz nach Anspruch 1, **dadurch gekennzeichnet,** daß die Kraftübertragungseinrichtung eine an dem Rückenlehnenrahmen (24) um eine Querachse (61a) frei drehbar angebrachte Welle (60) umfaßt, sowie ein Paar von Kipphebeln (62), welche an den Enden der Welle angebracht sind, wobei jeder mit seinen Enden mit den entsprechenden Seitenplatten (15a,54a) der zwei Hilfsstützelemente (15,54) durch Zapfen-Schlitzlochverbindungen (63,65;64,66) verbunden ist.

4. Sitz nach Anspruch 1, **dadurch gekennzeichnet,** daß die Rückenlehne (22) einen oberen Bereich (30) umfaßt, der einen um eine Querachse (34) an dem Rückenlehnenhauptrahmen (24) angelenkten Rahmen (27) aufweist, wobei der obere Rückenlehnenhilfsbereich (30) dazu bestimmt ist, den oberen Bereich des Rückens der sitzenden Person in der sich direkt unterhalb des Halses befindlichen Zone zu stützen, und wobei der obere Hilfsrahmen (27) am Hauptrahmen (24) mittels wenigstens eines Einstellmechanismus (35) angelenkt ist, der es ermöglicht, die Winkelposition des oberen Hilfsrahmens (27) um die obere Querachse (34) zu verändern.

5. Sitz nach Anspruch 3, **dadurch gekennzeichnet**, daß der Rückenlehnenrahmen (24) zwei Seitenschenkel (25) umfaßt, deren untere Enden sich nach vorne erstrecken und am Basisrahmen des Sitzes um eine relativ zur allgemeinen Ebene der Rückenlehne im wesentlichen nach vorne verschobene Querachse angelenkt sind.

6. Sitz nach Anspruch 3, **dadurch gekennzeichnet,** daß die Rückenlehne zwei verstellbare Seitenbereiche umfaßt, welche jeweilige Rahmen (40) aufweisen.

7. Sitz nach Anspruch 6, **dadurch gekennzeichnet,** daß die Rahmen (40) der verstellbaren Bereiche der Rückenlehne Elektromotoren (37,46,47,48) zum Antrieb der einstellbaren, beweglichen Bereiche der Rückenlehne tragen.

8. Sitz nach Anspruch 7, **dadurch gekennzeichnet,** daß einer der Elektromotoren mit dem Einstellmechanismus (58) der zwei Hilfsstützelemente (15,54) mittels einer flexiblen Kraftübertragungseinrichtung (61) und einer Untersetzungseinrichtung (60) verbunden ist.

## Claims

1. Motor vehicle seat (20), which comprises a backrest (22) itself comprising a backrest framework (24) and a lumbar support device (6, 15, 14, 54) associated with the backrest framework (24), in which the said lumbar support device comprises an elastically deformable panel (6) substantially parallel to the general plane of the backrest (24) and capable of assuming a curved-forwards configuration, the said lumbar support device further comprising means (15, 14, 54) for adjusting the degree of curvature of the panel (6) without substantially modifying the position of the zone of maximum curvature of the panel (6) with respect to the framework (24) of the backrest, the said adjusting means (15, 14, 54) comprising an auxiliary support element (15) to which is fixed the lower part of the elastic panel (6), the said auxiliary support element (15) being articulated to the framework (24) of the backrest about a transverse axis (14) located substantially at the height of the said zone of maximum curvature of the panel (6), with the aid of an adjusting mechanism (58 to 66) which makes it possible to adjust the angular position of the auxiliary support element (15) about the said transverse axis, with respect to the framework (24) of the backrest, the said auxiliary support element extending substantially below the said transverse axis (14), characterised in that the said lumbar support device (6, 15, 14, 54) comprises a second auxiliary support element (54) which extends substantially above the said transverse axis (14) to which the elastic panel (6) is connected, the said second auxiliary support element (54) itself also being articulated to the framework (24) of the backrest about the said transverse axis (14), the said adjusting mechanism (58 to 66) being able to give rise to a simultaneous rotation of the first and of the second auxiliary support elements (15, 54), one in the opposite direction from the other, so as to obtain adjustment of the degree of curvature of the panel without at the same time modifying the position of the zone of maximum curvature of the panel with respect to the framework (24) of the backrest.

2. Seat according to Claim 1, characterised in that the said auxiliary support elements (15, 54) each comprise two lateral sheet metal plates (15a; 54a) which are articulated about the said transverse axis (14) and have their ends connected together by a cross-member element (15b; 54b), the said adjusting mechanism (58 to 66) being able to give rise to a rotation of the second auxiliary support element (54) with respect to the framework (24) of the backrest, the said lumbar adjustment device further comprising a mechanical transmission (60, 62) interposed between the two auxiliary support elements ( 15,54) so as to bring about a rotation of the first auxiliary support element (15) in the opposite rotational direction from the second auxiliary element (54) following the rotation of the latter.

3. Seat according to Claim 1, characterised in that the said transmission comprises a shaft (60) mounted so as to rotate freely on the framework (24) of the backrest about a transverse axis (61a), a pair of rocker levers (62) mounted at the ends of the said shaft and each one connected by its ends to the respective lateral plates (15a, 54a) of the two auxiliary support elements (15, 54) by journal and slit connections (63, 65; 64, 66).

4. Seat according to Claim 1, characterised in that the backrest (22) comprises an upper part (30) which has a framework (27) articulated onto the main framework (24) of the backrest about a transverse axis (34), the said upper auxiliary part (30) of the backrest being intended to support the upper part of the back of the seated person, in the zone which is located directly below the neck, the said upper auxiliary framework (27) being articulated to the main framework (24) with the aid of at least one adjusting mechanism (35) which makes it possible to vary the angular position of the upper auxiliary framework (27) about the said upper transverse axis (34).

5. Seat according to Claim 3, characterised in that the framework (24) of the backrest comprises two lateral uprights (25) whose lower ends extend forwards and are articulated to the base framework of the seat about a transverse axis which is substantially offset forwards with respect to the general plane of the backrest.

6. Seat according to Claim 3, characterised in that the backrest comprises two orientable lateral parts which comprise respective frameworks (40).

7. Seat according to Claim 6, characterised in that the frameworks (40) of the said orientable parts of the backrest support electric motors (37, 46, 47, 48) for controlling the adjustable moving parts of the backrest.

8. Seat according to Claim 7, characterised in that one of the said electric motors is connected to the adjusting mechanism (58) of the two auxiliary support elements (15, 54) by means of a flexible transmission (61) and of a reduction device (60).
